# EUROPEAN PATENT SPECIFICATION

(11) **EP 0 314 839 B1**
(45) Date of publication and mention of the grant of the patent: **03.11.1993**
(21) Application number: 87202174.6
(22) Date of filing: 06.11.1987
(51) Int. Cl.: B25J 9/00, F16H 25/02

(54) **Positioning apparatus**
Positioniervorrichtung
Dispositif de positionnement

(43) Date of publication of application: 10.05.1989
(73) Proprietor: DE HAAN MECHATRONICS B.V., NL-9581 HE Musselkanaal (NL)
(72) Inventor: Rosenthal, Dov, Tel Aviv 42.275 (IL)
(74) Representative: van der Beek, George Frans, Ir.

(56) References cited:
- EP-A- 0 109 201
- DE-C- 953 569
- FR-A- 2 231 265
- FR-A- 2 394 724
- GB-A- 2 115 778
- US-A- 2 794 517
- US-A- 3 831 460
- IBM TECHNICAL DISCLOSURE BULLETIN, vol 28, no. 12, May 1986, pages 5582-5583 ; New York, US, "Six-axis precision posaitioning system".
- INTERNATIONAL JOURNAL OF ROBOTICS RESEARCH, vol. 5 no. 2, Cambridge, Mass, USA, pages 157-182, E.F. Fichter "A stewart-platform-based manipulator : General theory and practical construction"*

## Description

The invention relates to a positioning apparatus comprising a base, a first element pivotably mounted onto the base for pivotably positioning relative to said base about a first pivot axis, a second element pivotably mounted onto the first element for pivotable positioning relative thereto about a second pivot axis generally perpendicular to the first pivot axis, as well as first and second axially elongatable means mounted onto the base and to the elements. Such apparatus is known from GB-A-2115778. It is destined for operations requiring a large degree of accuracy even if relatively high loads are handled. Said known apparatus has a drawback in that its geometry is not optimal in this respect. The actuators connected to the second element only make a small angle with respect to each other, which causes considerable internal loads. These infavourable loads are disadvantageous for accuracy, and requires the element to be made very rigid and thus very heavy. A further disadvantage resides in the fact that the elongatable elements, which are carried out as spindles, are acting in series: this means that inaccuracies in the spindle-nut systems are added to the moving element to be positioned.

The aim of the invention is therefore to provide a positioning apparatus which lacks these disadvantages. This is obtained in that the second element is also pivotable with respect to the first element about a third pivot axis lying at an angle to the second pivot axis, and the first axially elongatable means are lying at an angle to a first plane extending through said first element and through said first pivot axis, said first axially elongatable means being mounted to either the first element or the second element for selectable positioning of the second element about the first pivot axis, and the second axially elongatable means are mounted pivotably onto said base and said second element at a distance from its pivoting connection with said first element for selectable positioning of said second element with respect to said pivot axis substantially perpendicular to said first pivot axis said second axially elongatable means comprising two axially elongatable elements arranged in a plane generally parallel to said first plane and having elongation axes which are angled with respect to each other and converging towards each other from said base to said second element. According to the invention, the first axially elongatable means can be positioned at a considerable angle to the first element to allow accurate movement thereof with low forces. In the average upright position of the first element, with the second axially elongatable means in a substantially vertical plane parallel thereto, said first axially elongatable means are hardly loaded.

Due to the fact that the second axially elongatable means are connected to the base at a distance from the first pivot axis, an optimal force distribution is assured when manipulating the second element both up and down and sideways. This effect is especially beneficial with respect to the loads generated by a robot hand and a tool, workpiece or the like situated at the end of the second element.

Moreover, the provision of two axially elongatable elements is favourable for carrying out swinging movements of the second element in a horizontal plane. Said movements can be obtained by simply changing the length of these elements in a suitable way, without having to rotate a rotation table as described in the state of the art mentioned before.

### BRIEF DESCRIPTION OF THE DRAWINGS

The present invention will be understood and appreciated more fully from the following detailed description taken in conjunction with the drawings in which:
Figs. 1A, 1B and 1C are respective pictorial, side and end view illustrations of a robot constructed and operative in accordance with a preferred embodiment of the present invention;
Figs. 2A, 2B, 2C and 2D are side view illustrations of the robot of Figs. 1A - 1C in four alternative operative orientations; and
Figs. 3A and 3B are end view illustrations of the robot of Figs. 1A - 1C in two alternative operative orientations.

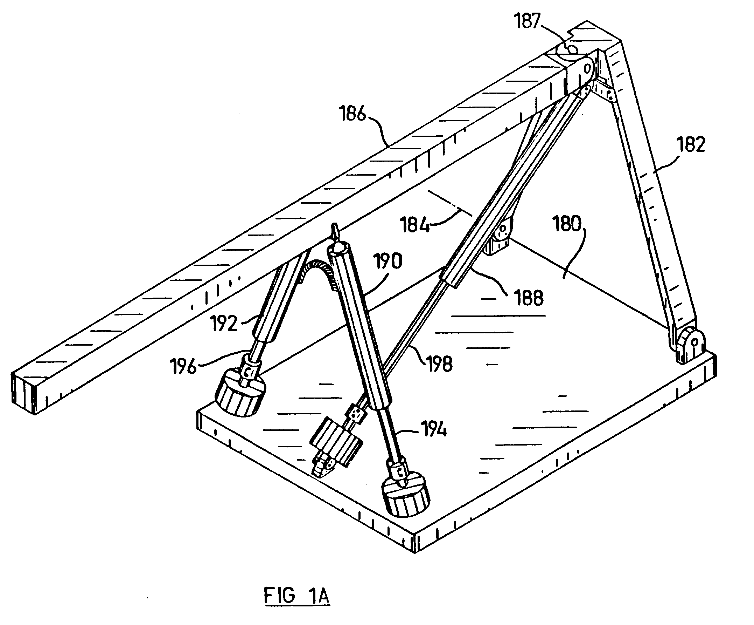

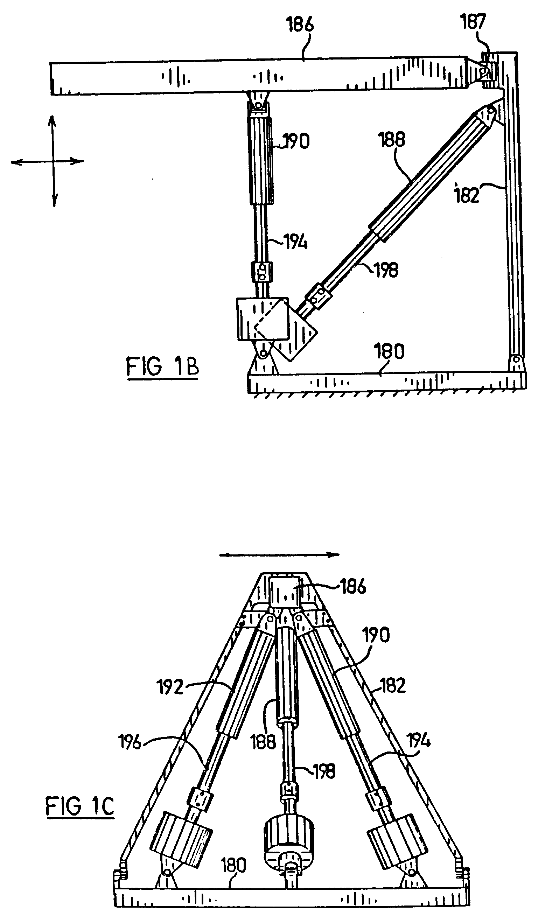

Reference is made to Figs. 1A - 1C which illustrate 3-dimensional positioning apparatus constructed and operative in accordance with a preferred embodiment of the invention and comprising a base 180 and a first element 182, typically in the form of a sawhorse bracket, pivotably mounted with respect to the base 180 for pivotable positioning relative to the base about a first pivot axis 184, typically lying parallel to the plane of the base 180.

A second element 186, typically in the form of a beam, is pivotably mounted with respect to the first element 188, preferably by a universal joint 187, which permits rotation of the second element 186 about the first pivot axis and also with respect to a second pivot axis perpendicular to the first pivot axis.

First axially elongatable means 188, typically in the form of an electrically actuable cylinder, but alternatively any suitable elongatable means, is mounted onto the base 180 and the first element 182 for selectable positioning of the first element about the first pivot axis.

Second axially elongatable means, typically in the form of a pair of electrically actuable cylinders 190 and 192, are mounted onto the base 180 and onto the second clement 186 for selectable positioning of the second element with respect to both the first and second pivot axes. It is appreciated that the cylinders 190 and 192 may operate in phase or out of phase, thus providing an additional degree of freedom. Thus both up and down motion and right to left motion may be provided thereby.

According to an alternative embodiment of the invention, cylinder 188 may be coupled directly to element 186 instead of being coupled to element 182. In such alternative embodiment, the three cylinders 188, 190 and 192 may all be joined to element 186 at the same general location.

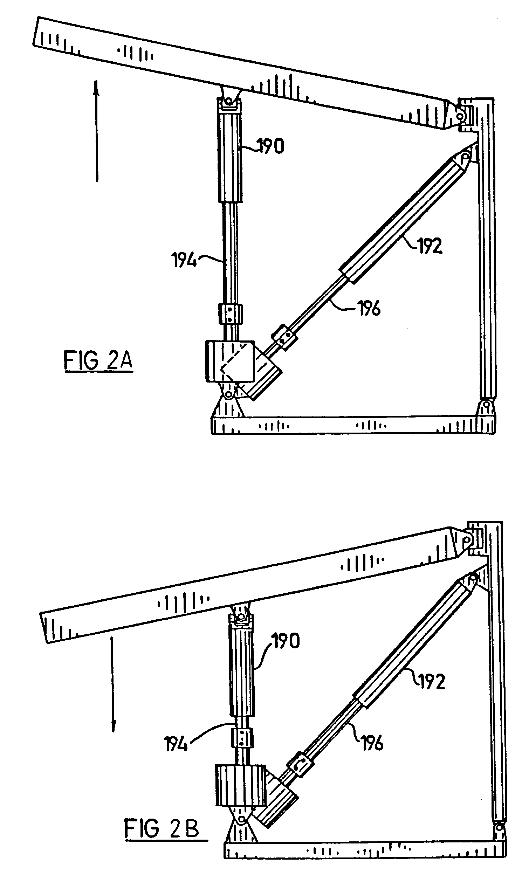

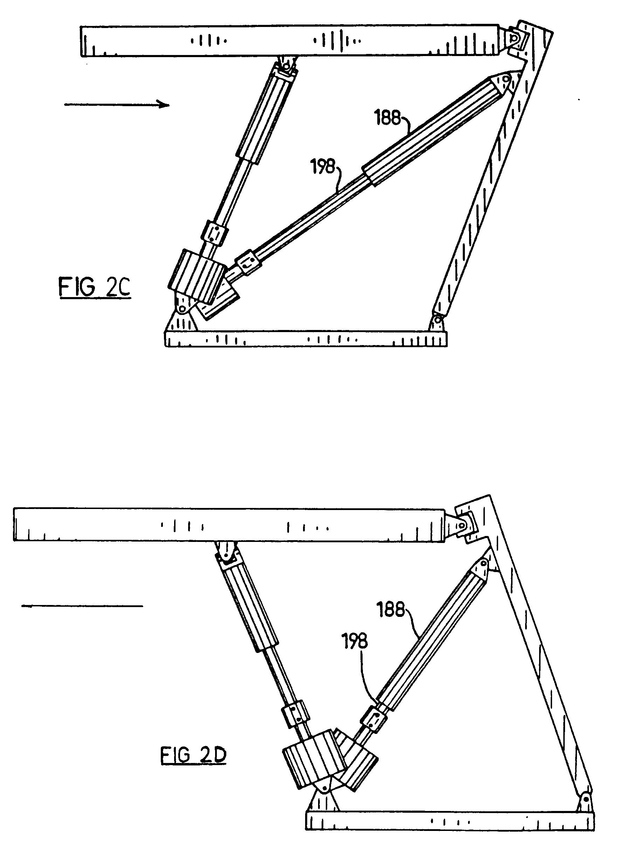

Figs. 1A-1C illustrate the positioning apparatus in a nominal position with all of the pistons in intermediate positions. Fig. 2A illustrates the positioning apparatus in a raised position, wherein pistons 194 and 196 of respective cylinders 190 and 192 are fully extended. Fig. 2B illustrates the positioning apparatus in a lowered position, wherein pistons 194 and 196, of respective cylinders 190 and 192 are fully retracted.

Fig. 2C illustrates the positioning apparatus in a backward position, wherein piston 198 of cylinder 188 is fully extended, and Fig. 2D illustrates the positioning apparatus in a forward position, wherein piston 198 of cylinder 188 is fully retracted.

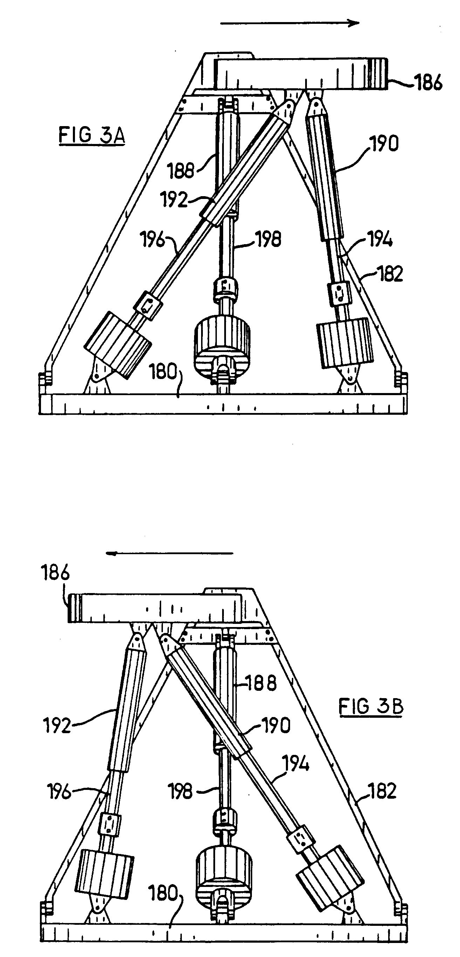

Fig. 3A illustrates the positioning apparatus in a left-sided orientation wherein piston 196 is extended more than piston 194 while Fig. 3B illustrates the positioning apparatus in a right-sided orientation wherein piston 194 is extended more than piston 196.

The table 110 and the beam 186 may be used for any suitable purpose in positioning parts, e.g. to be machined, or to position tools or measuring and sensing means, as is known as such in the art, e.g. in robots for handling and machining. The free end of beam 186, to be positioned accurately in space as described, may carry gripping means not shown and known as such, to grip articles to be treated, machined or operated on in any other manner, to move such articles to a treatment zone, to hold them during treatment if so desired, and to move them back to the point where they were thus gripped, or only to convey articles from one point to another etc. The purpose may be to save manual labor, to avoid heavy loads having to be moved by personnel, to speed up treatments, to obtain more accurate positioning of articles, to hold the exactly in place during longer time intervals and/or to exert any of such operations in an environment dangerous to men or not easily accessible to personnel etc.

It will be appreciated by persons skilled in the art that the examples provided above are merely illustrative of the structure and operation of the apparatus of the present invention. The present invention is not defined by what is described hereinabove but rather the scope of the invention is limited only by the claims which follow.

## Claims

1. Positioning apparatus comprising a base (180), a first element (182) pivotably mounted onto the base (180) for pivotably positioning relative to said base (180) about a first pivot axis (184), a second element (186) pivotably mounted onto the first element (182) for pivotable positioning relative thereto about a second pivot axis (187) generally perpendicular to the first pivot axis (184), as well as first (188) and second (192,194) axially elongatable means mounted onto the base (188) and to the elements characterized in that the second element (186) is also pivotable with respect to the first element (182) about a third pivot axis lying at an angle to the second pivot axis (187), and the first axially elongatable means (188) are lying at an angle to a first plane extending through said first element (187) and through said first pivot axis (184), said first axially elongatable means (188) being mounted to either the first element (182) or the second element (186) for selectable positioning of the second element (186) about the first pivot axis (184), and the second axially elongatable (192,194) means are mounted pivotably onto said base (180) and said second element (186) at a distance from its pivoting connection (187) with said first element (187) for selectable positioning of said second element (186) with respect to said pivot axis (187) substantially perpendicular to said first pivot axis (184) said second axially elongatable means comprising two axially elongatable elements (192,194) arranged in a plane generally parallel to said first plane and having elongation axes which are angled with respect to each other and converging towards each other from said base (180) to said second element (186).

2. Positioning apparatus according to claim 1, in which there is a universal joint between the said first (182) and second (186) elements.

## Patentansprüche

1. Positioniervorrichtung mit einer Basis (180), einem schwenkbar auf der Basis (180) angebrachten ersten Element (182), zur schwenkbaren Positionierung in bezug auf die Basis (180) um eine erste Schwenkachse (184), einem schwenkbar auf dem ersten Element (182) angebrachten zweiten Element (186) zur schwenkbaren Positionierung in bezug auf dieses um eine zweite Schwenkachse (187), die im wesentlichen senkrecht zur ersten Schwenkachse (184) angeordnet ist, und mit ersten (188) und zweiten (192, 194) axial verlängerbaren Einrichtungen, die auf der Basis (188) und den Elementen angebracht sind,
dadurch **gekennzeichnet,** daß
das zweite Element (186) auch in bezug auf das erste Element (182) um eine dritte Schwenkachse verschwenkbar ist, die in einem Winkel zur zweiten Schwenkachse (187) angeordnet ist, und die ersten axial verlängerbaren Einrichtungen (188) in einem Winkel zu einer ersten Ebene angeordnet sind, die sich durch das erste Element (187) und durch die erste Schwenkachse (184) erstreckt, die erste axial verlängerbare Einrichtung (188) entweder am ersten Element (182) oder am zweiten Element (186) angebracht ist, um das zweite Element (186) wahlweise um die erste Schwenkachse (184) herum zu positionieren, und die zweite axial verlängerbaren Einrichtung (192, 194) schwenkbar an der Basis (180) und dem zweiten Element (186) in einer Entfernung von dessen Schwenkverbindung (187) mit dem ersten Element (187) angebracht ist , zur wahlweisen Positionierung des zweiten Elements (186) in bezug auf die Schwenkachse (187) im wesentlichen senkrecht zur ersten Schwenkachse (184), wobei die zweite axial verlängerbaren Einrichtung zwei axial verlängerbare Elemente (192, 194) aufweist , die in einer Ebene im wesentlichen parallel zur ersten Ebene angeordnet sind, und Verlängerungsachsen aufweist , die in einem Winkel zueinander stehen und zueinander von der Basis (180) zum zweiten Element (186) zusammenlaufen.

2. Positioniervorrichtung nach Anspruch 1, bei welcher ein Universalgelenk zwischen dem ersten (182) und zweiten (186) Element vorgesehen ist.

## Revendications

1. Appareil de positionnement comprenant une base (180), un premier élément (182) monté en rotation sur la base (180) pour un positionnement par pivotement par rapport à ladite base (180) autour d'un premier axe de pivotement (184), un deuxième élément (186) monté en rotation sur le premier élément (182) pour un positionnement par pivotement par rapport à ce dernier autour d'un deuxième axe de pivotement (187) généralement perpendiculaire au premier axe de pivotement (184), ainsi que des premier (188) et deuxième (192, 194) moyens extensibles axialement montés sur la base (188) et sur les éléments, caractérisé en ce que le deuxième élément (186) est aussi pivotable par rapport au premier élément (182) autour d'un troisième axe de pivotement formant un angle avec le deuxième axe de pivotement (187), et les premiers moyens extensibles axialement (188) forment un angle avec un premier plan s'étendant à travers ledit premier élément (187) et à travers ledit premier axe de pivotement (184), lesdits premiers moyens extensibles axialement (188) étant montés soit sur le premier élément (182), soit sur le deuxième élément (186) afin de sélectionner le positionnement du deuxième élément (186) autour du premier axe de pivotement (184), et les deuxièmes moyens extensibles axialement (192, 194) sont montés en rotation sur ladite base (180) et ledit deuxième élément (186) à une distance de sa liaison pivotante (187) avec ledit premier élément (187) afin de sélectionner le positionnement dudit deuxième élément (186) par rapport audit axe de pivotement (187) sensiblement perpendiculaire audit premier axe de pivotement (184), lesdits deuxièmes moyens extensibles axialement comprenant deux éléments extensibles axialement (192, 194) disposés dans un plan généralement parallèle audit premier plan et ayant des axes d'extension qui forment un angle entre eux et convergeant l'un vers l'autre à partir de ladite base (180) jusqu'audit deuxième élément (186).

2. Dispositif de positionnement selon la revendication 1, dans lequel il y a un joint universel entre lesdits premier (182) et deuxième (186) éléments.
